Europäisches Patentamt

European Patent Office

Office européen des brevets

(11) Publication number: 0 359 658
A2

# (12) EUROPEAN PATENT APPLICATION

(21) Application number: 89402493.4

(22) Date of filing: 12.09.89

(51) Int. Cl.5: **G 02 B 1/10**
G 02 B 5/28, G 02 B 5/30,
G 02 B 27/14, G 02 B 27/28

(30) Priority: 12.09.88 JP 227901/88
01.12.88 JP 306583/88
05.12.88 JP 307290/88
09.12.88 JP 312521/88

(43) Date of publication of application:
21.03.90 Bulletin 90/12

(84) Designated Contracting States: DE FR GB NL

(71) Applicant: FUJITSU LIMITED
1015, Kamikodanaka Nakahara-ku
Kawasaki-shi Kanagawa 211 (JP)

(72) Inventor: Suzuki, Toshihiro
1643-15, Tsurumaki
Hadano-shi Kanagawa 259 (JP)

Ishii, Tomoyuki
1-5-5, Tsujido Motomachi
Fujisawa-shi Kanagawa 251 (JP)

Komenou, Kazunari
Atsugiribasaido 5-205 2374, Okada
Atsugi-shi Kanagawa 243 (JP)

Abe, Fumitaka
1-3-208, Hakusan 5-chome Asao-ku
Kawasaki-shi Kanagawa 215 (JP)

(74) Representative: Joly, Jean-Jacques et al
CABINET BEAU DE LOMENIE 55, rue d'Amsterdam
F-75008 Paris (FR)

(54) Optical base material and optical product using the same and method of manufacturing the optical base material.

(57) An optical base material (77) comprising more than two transparent parallel plates (2) and more than one thin layer (1) having a desired optical function, the transparent parallel plates (2) and thin layers (i) being alternately laminated so that the transparent parallel plates form the outermost layers, and a method of manufacturing such an optical base material ano an optical element using the same.

Fig. 1

EP 0 359 658 A2

# Description

## OPTICAL BASE MATERIAL AND OPTICAL PRODUCT USING THE SAME AND METHOD OF MANUFACTURING THE OPTICAL BASE MATERIAL

### BACKGROUND OF THE INVENTION

#### 1. Field of the invention

The present invention relates to an optical base material and an optical product including a compound optical element, using the optical base material. The invention also relates to a method of manufacturing such an optical base material.

#### 2. Description of the Related Art

In the field of optical communications, light is used as a signal for a main transmission line such as a submarine communication cable. Recent improvements in optical fibers, laser sources, optical data links and other optical elements have made it possible to apply this principle of optical communication to a Local Area Network (LAN) or the like, and this kind of information network system using optical fibers is used in current "intelligent" buildings.

Optical fibers or optical data links are also used in the computer field, to enable an increase in data processing speed or transmission speed, and to prevent Electromagnetic Interference (EMI). This has led to a strong demand for the use of optical techniques in data processing instruments; typical examples of which are optical magnetic disc devices used as a rewritable mass memory and laser printers.

Further, in the civilian electronic field, an increased number of audio discs (CD: Compact Disc) utilizing optical techniques are available on the market.

These optical instruments or products use a combination of a number of optical elements, such as a lens, prism beam splitter, and wave plate, etc.

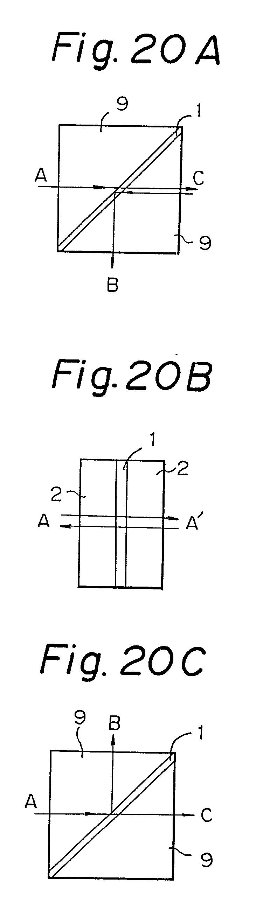

In a conventional optical element, for example, a polarization beam splitter or other beam splitter or half mirror is usually made of two prisms 9 and a thin plate or film 1 having a desired optical function arranged between the prisms, as shown in Fig. 20A or 20C.

An optical element such as a halfwave plate ($\lambda/2$ plate), quarter wave plate ($\lambda/4$ plate) or other wave plate, wavelength filter, or total reflection mirror, however, is usually made of two transparent plates 2 and a thin plate or film 1 having a desired optical function arranged between the transparent plates, as shown in Fig. 20B. Note, in Figs. 20A, 20B, and 20C, the transmission beam is designated A and A and the reflected beam C.

Those components of the optical elements which are separate pieces must be usually manually and precisely made by a highly skilled person, and this not only restricts the ability to minimize and lighten the optical system as a whole but also necessitates a careful treatment and maintenance of those components.

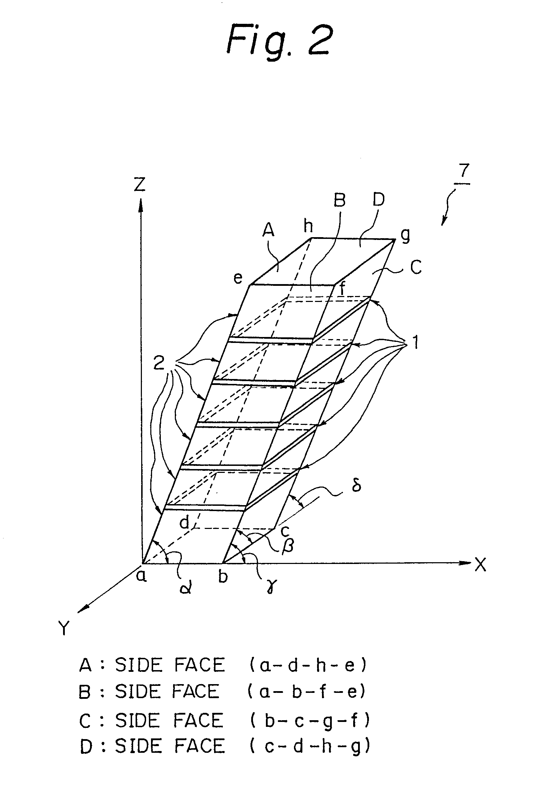

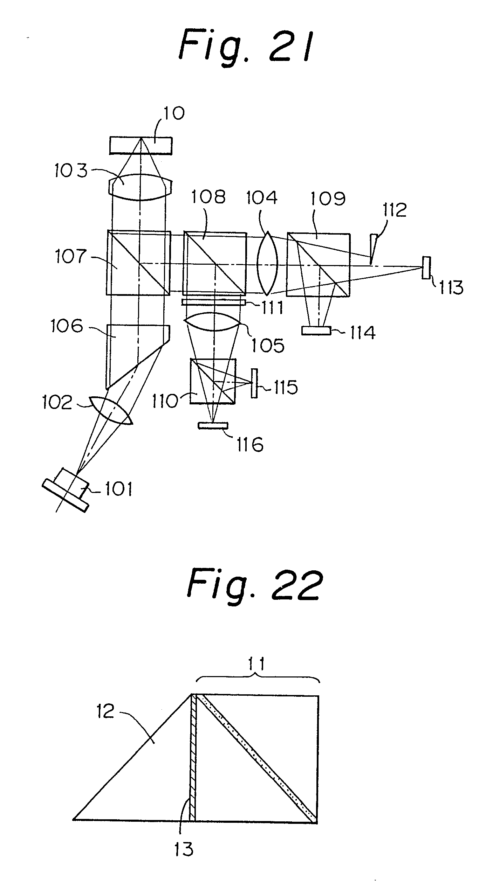

Generally speaking, these optical components are combined in such a way that they constitute a desired complex optical device having a predetermined optical function. Figure 21 shows an example of an optical head for a optical magnetic disc (refer to the standard optical disc technique handbook). In Fig. 2, 111 designates a halfwave plate ($\lambda/2$ plate), 106 a beam shaping prism, 102-105 four independent lenses, and 107-110 four independent polarization beam splitters. In the arrangement shown in Fig. 21, p-polarized light emitted from a laser diode 101 is converted to a parallel beam, shaped by the beam shaping prism 106, transmitted through the first polarization beam splitter 107, converged by a condenser lens 103, and made incident upon an optical magnetic disc 10.

The light reflected from the optical magnetic disc 10 is subject to Kerr rotation and is split into transmitted light and reflected light by the second polarization beam splitter 108. The transmitted light is sent to a focus error detecting system including the lens 104, the third polarization beam splitter 109, a knife edge 112, and a first photodetector 113, and is partly split (reflected) by the third beam splitter 109 so that the thus reflected beam is converged onto a second photodetector 114 which constitutes a tracking error detection system. The light reflected by the second polarization beam splitter 108 is sent to a signal detection system including second and third photodetectors 115 and 116. Thereafter, a $\lambda/2$ plate 111 located behind the second beam splitter 108 is rotated to change the direction of the polarization of the signal light, to obtain a maximum amplitude of the signals.

The signals detected by the two photodetectors 115 and 116 are the light transmitted and reflected by the beam splitter 110 of the signal detection system i.e., p-polarized light and s-polarized light (or vice versa), respectively. Namely, the signals detected by the two photodetectors 115 and 116 have different phases, and thus noise having the same phase is eliminated by a differential detection to increase the S/N.

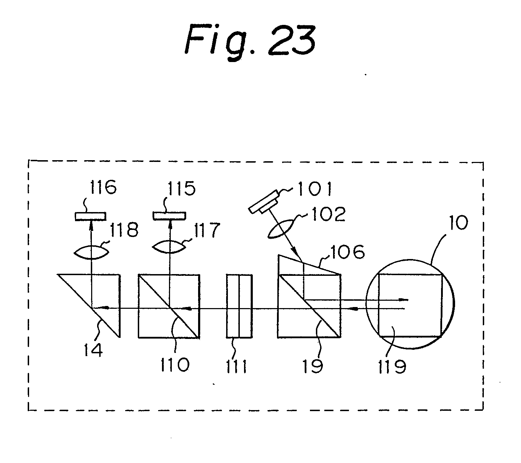

Figure 23 shows an example of a known optical head in which a prism 119 is used to change the direction of the light path at a right angle, to realize a more practicable arrangement. It is also possible to provide a tracking error detecting system as mentioned above.

The optical components used in the optical head device as mentioned above have a length of at least 2 - 3 mm, and accordingly, an optical device using a combination of the optical components is 20 - 30 mm in length and has a weight of 200 - 300 grams.

The current demand for high performance, multifunction, and high precision optical devices is increasing; for example, in the case of an optical magnetic disc device, a high speed drive of an optical head thereof is a significant factor in the need to satisfy requirements for a large storage capacity and high speed access. Accordingly, the optical head and components thereof must be made smaller, lighter and have more functions.

To reduce the size of an optical system composed of separate optical elements or components, it is known to adhere the separate optical elements or components to each other by an optical adhesive, after the necessary adjustments such as an alignment of an optical axis are completed; as shown in Fig. 22, wherein 11 designates a polarization beam splitter, 12 a total reflection mirror, and 13 optical adhesive layers. Nevertheless, this compound element is still large and heavy since it merely comprises existing optical components (11, 13, etc.) connected to each other. Namely, the compound element shown in Fig. 22 does not provide a novel product which completely changes the conventional image of an optical element. Further, the positioning and adhering of the separate components requires a very precise machining technique, which increases the manufacturing cost.

SUMMARY OF THE INVENTION

Therefore, the primary object of the present invention is to provide a small and light optical base material (compound optical element) which comprises a laminated block composed of transparent parallel plates and laminated layers of thin plates or films having a desired optical function arranged between the transparent parallel plates, and a method of manufacturing such a base material.

BRIEF DESCRIPTION OF THE DRAWINGS

The invention will be described below with reference to the accompanying drawings in which:

Figure 1 is a perspective view of an optical base material according to the present invention;

Fig. 2 is an explanatory perspective view of a laminated block cut from an optical base material;

Figs. 3A, 3B, 3C, and 3D are schematic views showing different shapes of opposite ends of outermost layers of a compound optical element according to the present invention;

Fig. 4 is an explanatory view showing a method of manufacturing a laminated block of a compound optical element according to the present invention;

Figs. 5A, 5B, and 5C are schematic view of three embodiments of a compound optical element for an optical head;

Figs. 6A, 6B, 6C, and 6D are schematic views of four embodiments of a compound optical element according to the present invention when applied to an optical head for a photomagnetic disc device;

Figs. 7A, 7B, and 7C are schematic views of three embodiments of a compound optical element according to the present invention when applied to an optical switch;

Figs. 8A and 8B are schematic views of two embodiments of a compound optical element according to the present invention when applied to a beam splitter and a beam collector, respectively;

Figs. 9A, 9B, and 9C are schematic views of an embodiment of a compound optical element for an optical head according to the present invention;

Figs. 10A and 10B are schematic views of two embodiments of a compound optical element for an optical head according to the present invention;

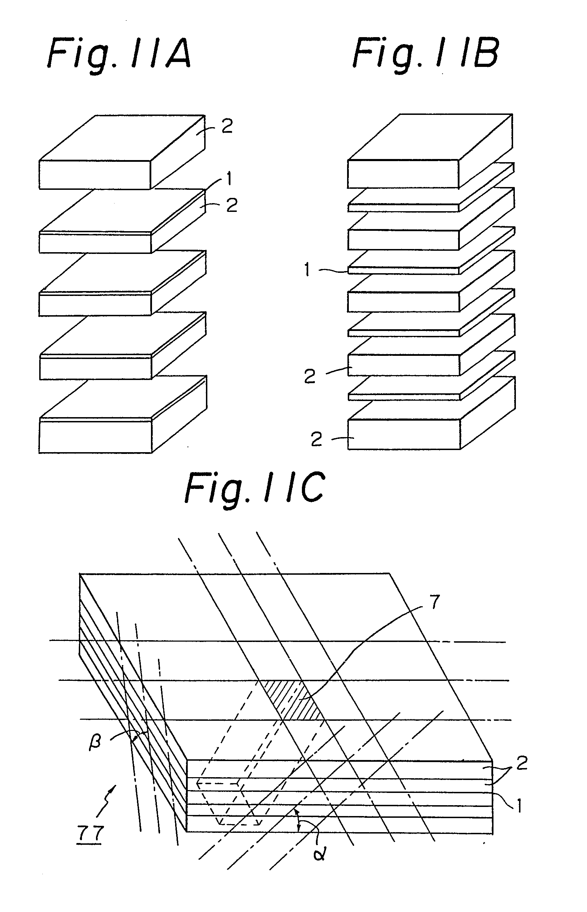

Figs. 11A, 11B, and 11C are schematic views showing a construction of an optical base material and a method of cutting same to form a laminated block, according to the present invention;

Fig. 12 is a schematic view showing a method of cutting an optical base material to form individual laminate blocks at one time, according to the present invention;

Fig. 13 is a schematic view of an optical head for a photomagnetic disc device in which an optical compound element according to the present invention is used;

Figs. 14A and 14B are schematic sectional views showing the structure and basic principles of an optical element (phase element) according to the present invention;

Fig. 15 is a schematic view of a two-beam type optical head for a photomagnetic disc according to the present invention;

Figs. 16A, 16B, and 16C are schematic views of three embodiments of an optical element according to the present invention;

Fig. 17 is a schematic view showing the structure and basic principle of an optical element according to an embodiment of the present invention;

Fig. 18 is a schematic view of a two-beam optical head for a photomagnetic optical disc in which an optical element of the present invention is used;

Figs. 19A, 19B, 19C, and 19D are schematic views of four embodiments of an optical element according to the present invention;

Figs. 20A, 20B, and 20C are schematic views of known optical elements such as a polarization beam splitter, wave plate, and half mirror;

Fig. 21 is a schematic view of a known two-beam optical head for a photomagnetic optical disc;

Fig. 22 is a schematic view of a known compound optical element;

Fig. 23 is a schematic view of a known optical head having a prism;

Fig. 24 is a schematic sectional view of a known wave plate; and,

Fig. 25 is a schematic view of a known two-beam optical head for a known photomagnetic disc.

DESCRIPTION OF THE PREFERRED EMBODIMENTS

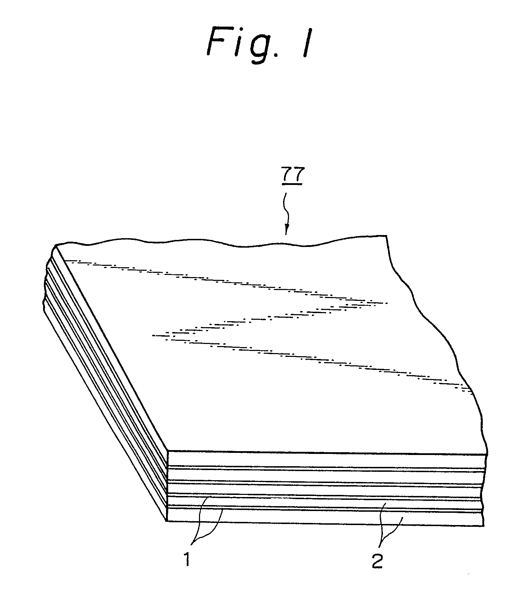

Figure 1 shows a basic principle of an optical base material 77 according to the present invention. In Fig. 1, 1 designates thin plates or films having a desired optical function or functions, and 2 designates parallel transparent flat plates laminated in such a manner that the thin plates or films 1 are held therebetween; the outermost upper and lower layers are transparent flat plates 2. The thin plate or film 1 (referred to as a thin film hereinafter) provides any one of the optical functions of a polarization beam splitter, half mirror, or other beam splitter, total reflection mirror, $\lambda/2$ plate, $\lambda/4$ plate or other polarization element (phase element, optical rotary element, Farady rotary element, Kerr rotary element, etc.) or wavelength filter. Alternatively, the thin film 1 can be made of a compound film having a plurality of film elements having different optical functions, as mentioned above.

Figure 2 is a perspective view of a laminated block 7 having four side faces A, B, C, and D obtained by cutting the optical base material 77 along four planes intersecting all of the laminated planes; $\alpha$, $\beta$, $\tau$ and $\delta$ are angles of the side faces A, B, C, and D with respect to the laminated planes.

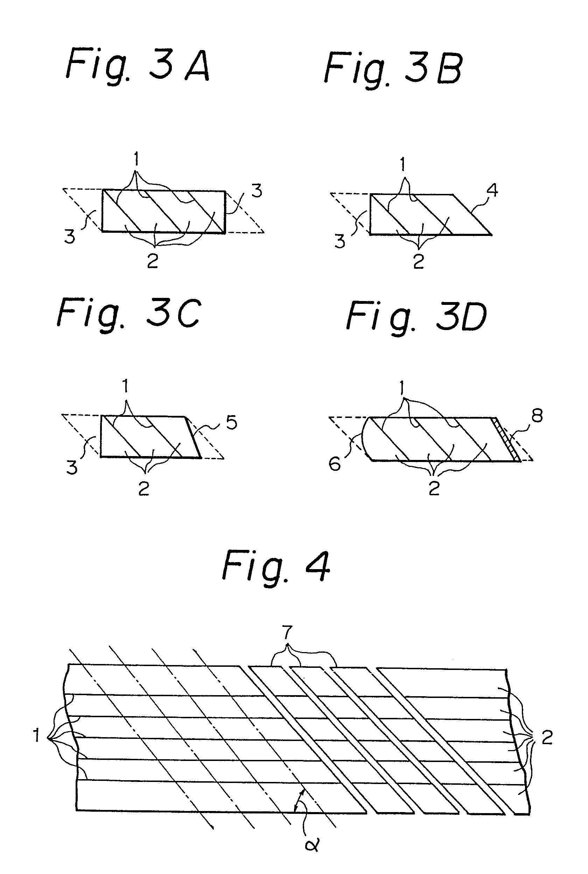

Figures 3A, 3B, 3C, and 3D show the shapes of the opposite ends of the outermost layers needed to realize a compound optical element according to the present invention. The outer surface of at least one of the two outermost transparent plates of the laminated block is shaped as shown in Figs. 3A, 3B, 3C, and 3D, i.e., the opposite outer surface 3 (Fig. 3A) or 3 and 5 (Fig. 3C) are not parallel with the laminated planes. In Fig. 3B, only one of the opposite surfaces, i.e., the end surface 3, is not parallel with the laminated planes; the other end surface is parallel with the laminated planes. In Fig. 3D, the end surface 6 is curved and the other end surface 8, which is not planar, is provided with gratings or a similar optical function.

It is also possible to make the two outermost transparent plates slightly thicker than the intermediate transparent plate(s), taking the machining tolerance into consideration.

Two or more than two of the total six surfaces consisting of four side surfaces and two outer surfaces obtained when the two transparent plates are cut are formed as a plane or shaped to serve as a light incident surface and light emitting surface.

Figure 4 is a sectional view showing how to manufacture the laminated block 7 according to the present invention.

First, the optical base material 77 is cut along the four planes intersecting all of the laminated planes, to obtain a number of laminated blocks 7 having four side surfaces, and thereafter, at least one outer surface of the two outermost transparent plates of each of the laminated blocks 7 is shaped to be either parallel with the laminated planes, not parallel with the laminated planes, curved, or provided with gratings. Subsequently, two or more than two of the six surfaces including the four side faces and the opposite end faces are subject to an optical treatment and formed into surfaces upon which light is incident and from which light is emitted.

According to the present invention, each of the layered portions of the laminated block shown in Fig. 2 serves as an optical element, and accordingly, the increased number of layers increases the optical functions. Namely, by cutting the ends of the laminated block to form different shapes, as mentioned above, a lens, a prism or other optical functions can be obtained.

Note, these laminated blocks can be inexpensively mass-produced by an automatic precision machine.

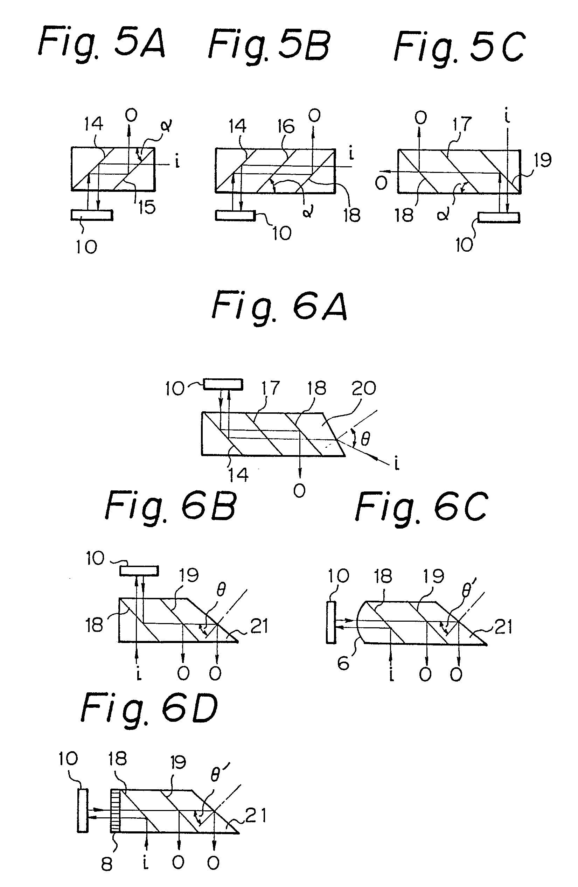

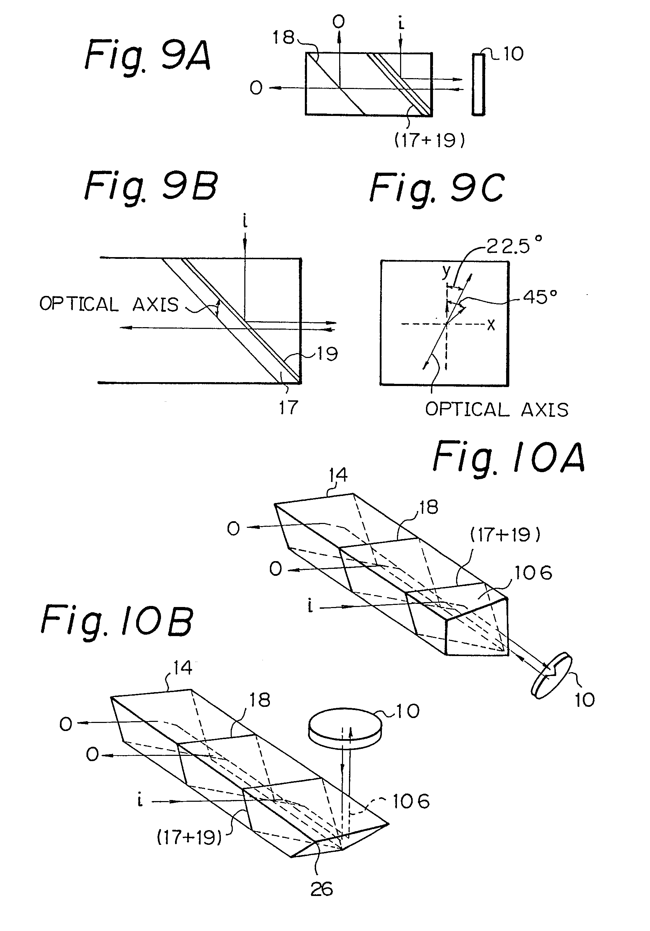

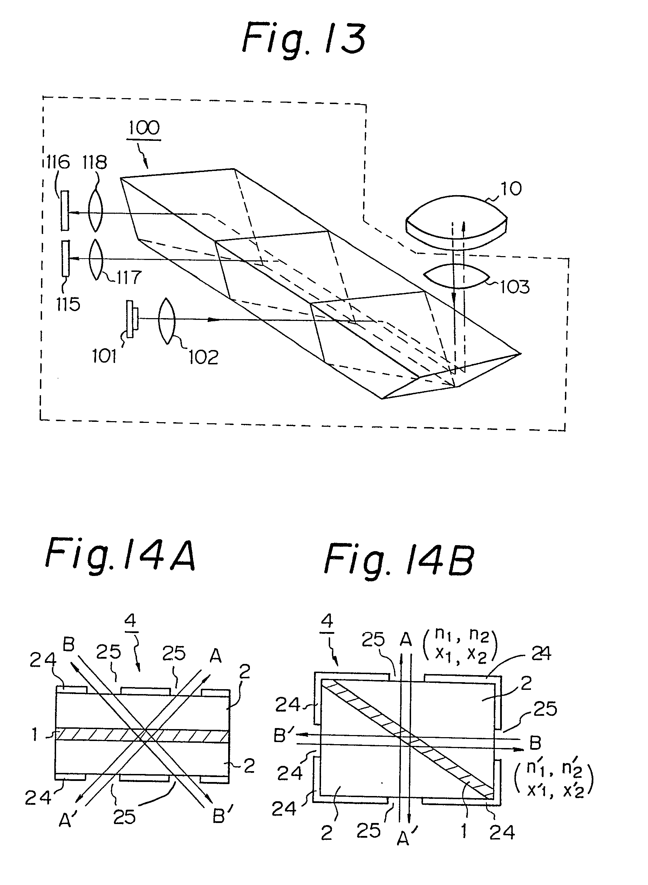

In the embodiments 1 through 5 shown in Figs. 5A - 5C, Figs. 6A - 6D, Figs. 7A - 7C, Figs. 8A - 8B, and Figs. 9A - 9C, respectively, the four side faces A, B, C, and D form angles of $\alpha = 45°$, $\beta = 90°$, $\tau = 45°$ and $\delta = 90°$ with respect to the laminated planes of the laminated block 7 obtained by cutting the optical base material 77 along four planes, respectively. In the embodiments 6 and 9 shown in Figs. 10A, 10B and Fig. 13, however, $\alpha = $ , $\tau \neq 45°$ and $\beta \neq \delta \neq 90°$, respectively.

Embodiment 1

Figure, 5A, 5B and 5C show examples of compound optical elements applied to a part of various optical disc devices.

The compound optical element shown in Fig. 5A is used only for reading a Compact DISC (CD), in which an incident light i is partly transmitted through and partly reflected by a half mirror 15. The reflected light can be used as a monitoring light for controlling a light source not shown), and the transmitted light is reflected by the mirror 14 and made incident on the disc 10. The light reflected from the disc 10 is again reflected by the mirror 14 and then partly reflected by the half mirror 15, so that about 25% of the original light is emitted from the optical element and made incident on a photodetector (not shown) which processes the signal light o.

The compound optical element shown in Fig. 5B is used for a tracking type optical disc, in which the incident light i is a p-polarized light with respect to the polarization beam splitter 18, so that almost all (substantially 100%) of the light is transmitted therethrough. The transmitted light is made incident on and is reflected by the disc. While traveling along the outgoing path to the disc and the return path therefrom, the light passes the $\lambda/4$ plate 16 twice, so that the plane of polarization is turned 90°. As a result, the light is turned to become an s-polarized light which is almost all reflected by the polarization beam splitter 18 to become emitted light (signal light) o.

The compound optical element shown in Fig. 5C is used in an optical head for a photomagnetic optical disc, in which 19 designates a film serving as a beam splitter, 17 is a thin plate serving as a halfwave plate ($\lambda/2$ plate), and 18 is a film serving as a polarization beam splitter.

In Fig. 5C, the transparent parallel plates are made of a usual optical glass, e.g., BK 7. The $\lambda/2$ plate 17 can be made of a double refraction crystal, such as a crystal thin plate, and the beam splitter 19 and the polarization beam splitter 18 can be made of a dielectric multilayer, such as $TiO_2$ or $SiO_2$ formed by sputtering or the like.

The incident light i emitted from the laser diode (not shown) is a p-polarized light, and accordingly, a large part of the light is transmitted through the beam splitter 19 and the remaining light reflected by the beam splitter 19 is used as a monitoring light for controlling the laser diode.

The transmitted light is reflected by the photomagnetic disc 10 and is subject to Kerr rotation to include an s-polarized light, and thereafter, the light is reflected by the beam splitter 19 and is transmitted through the $\lambda/2$ plate 17. Subsequently, the light is split into a transmitted light (p-polarization) and a reflected light (s-polarization) by the polarization beam splitter 18.

Since the electrical signals detected by respective photodetectors (not shown) receiving the transmitted light and the reflected light have opposite phases, a high S/N ratio can be obtained by the differential detection thereof.

Note that the $\lambda/2$ plate 17 is set in such a way that the signal amplitude, which can be adjusted by rotating the direction of polarization of the return light by rotating the $\lambda/2$ plate 17, becomes largest with respect to the polarization beam splitter 18.

Also note that object lenses or the like are omitted in Figs. 5A, 5B and 5C, for clarification of the drawings.

Embodiment 2

Figure 6A - 6D show an example of a compound optical element applied to an optical head for a photomagnetic disc device. In this embodiment, the end faces of the compound optical element are cut to different shapes, i.e., the end faces include planes not parallel with the laminated planes, curved surfaces or gratings.

Figure 6A, 6B, 6C, and 6D show a Brewster prism having an incident surface with a Brewster angle $\theta$, a critical angle prism having an outgoing surface with a critical angle $\theta'$, a combination of a critical angle prism and a convex lens, and a combination of a critical angle prism and a grating (Fresnel lens), by way of examples, respectively.

As the curved surface, it is also possible to provide an optical function of a concave lens, a cylindrical lens, or another function. Furthermore, as the grating, it is also possible to provide, other than the Fresnel lens, a wavelength filter, a light deflection or a light reflection.

The grating can be formed by a thickness modulation, or by an index modulation using photolithography, electrobeam lithography, ion injection, ion diffusion or the like.

Embodiment 3

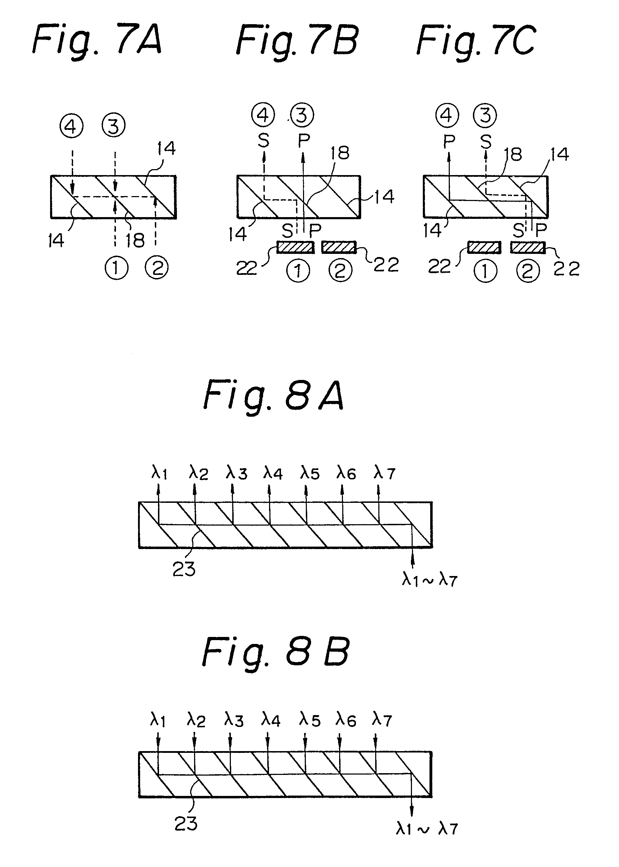

Figure 7A, 7B, and 7C show an embodiment of the present embodiment when applied to an optical switch (2 x 2). In Figs. 7A, 7B, and 7C, 1 and 2 show incident ports and 3 and 4 show emitting ports.

Figure 7B and 7C shown a switching operation, in which 22 designates an S wave/P wave converting element using a magnetooptic effect or the like. For example, the light incident on the port 1 is converted to a P-polarized light or an S-polarized light by the S-wave/P-wave converting element 22, so that if the light is p-polarized light it is transmitted through the polarization beam splitter 18 and emitted from the port 3 , and if the light is s-polarized light, it is reflected by the polarization beam splitter 18 and then reflected by the total reflection mirror 14 to be emitted from the port 4 .

In the case of Fig. 7C, the light incident on the port 2 travels along a similar path so that, contrary to Fig. 7B, an s-polarized light is emitted from the port 3 and a p-polarized light is emitted from the port 4 , and accordingly, this embodiment can be used as a channel selector.

Embodiment 4

Figure 8A and 8B show a wave separator and a wave collector, respectively. The films 23 corresponding to the films 1 having desired optical functions shown in Fig. 1 are wavelength filters (BPF) which reflect predetermined specific wavelengths. A dielectric multilayer or gratings can be used as the films. The functional films 23, when serving as a wavelength filter, selectively reflect light having specific wavelengths $\lambda1$, $\lambda2$ ... $\lambda7$, and accordingly, can be used for wave separation or wave collection. It is also possible to use this embodiment as an input/output device or a spectrometer for an optical multiplex communication.

Note, this embodiment can be particularly advantageously used when the number of laminated layers is increased.

Embodiment 5

Figure 9A shows a compound optical element which comprises a combination of a beam splitter 19 as an optical functional film and a $\lambda/2$ plate 17 as an optical functional thin plate, corresponding to the embodiment shown in Fig. 5C.

Figure 9B is an enlarged view of a compound optical function film shown in Fig. 9A. The beam splitter 19 and the $\lambda/2$ plate 17 can be formed in the same way as the embodiment 1 shown in Fig. 1.

In Fig. 9C, the arrows represent the directions of the optical axis of the $\lambda/2$ plate 17, which is inclined at about 22.5° with respect to the y-axis, as viewed from the direction of incidence on and emission from the plane of the optical disc 10. Therefore, as is well broken, the plane of polarization of the return light transmitted through the $\lambda/2$ plate 17 is rotated by 45° to increase the signal amplitude, so that the differential detection of the opposite phases of the transmitted light and the reflected light received by the respective photodetectors (not shown) can be effected, as mentioned in the embodiment 1.

Embodiment 6

Figure 10A and 10B show a modified embodiment in which $\alpha$, $\beta$, $\tau$ and $\delta$ are more common and complex, and are $\alpha = \tau \neq 45°$, $\beta \neq \delta \neq 90°$, as mentioned before.

The compound optical element for an optical head includes a complex optical functional thin plate composed of a combination of a beam splitter layer 19 and a $\lambda/2$ plate 17, a polarization beam splitter film 18, and a mirror 14. Note, in this embodiment, the upper surface of the element constitutes beam incident and emitting surfaces and has a prism angle by which it can function as a beam shaping prism 106. In Fig. 10A, the light paths of the incident and emitted beams on and from the reflection target, e.g., the photomagnetic disc 10, are in parallel with the optical paths in the compound optical element.

In Fig. 10B, an additional function is provided for the beam shaping prism 106, so that the prism 26 formed at the end of the compound optical element (beam shaping prism 106) changes the direction of the beams upward, i.e., to a direction perpendicular to the optical path in the compound optical element. In this embodiment, the disc 10 lies on a plane perpendicular to the disc shown in Fig. 10B.

Embodiment 7

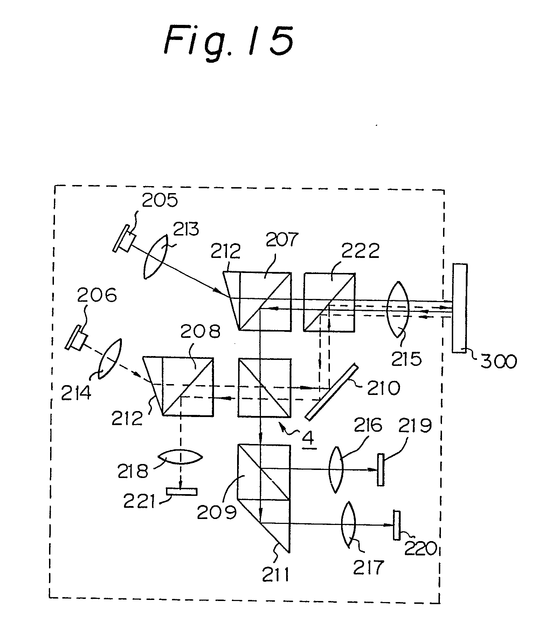

Figures 15A, 15B, and 15C show how to cut the laminated blocks 7 from the optical base material 77, wherein Fig. 15A is a conceptional view of a superimposition of transparent parallel plates 2 made, for example, of optically polished optical glass BK7, and optical functional films 1 such as the dielectric multilayers as shown in the embodiment 1 mentioned above, formed on the surfaces of the transparent parallel plates 2. In Fig. 15B, the optical functional thin plates 1 made of optically polished crystals are laminated.

In both examples, each layer is adhered to the other by an optical adhesive, such as epoxy resin, to form an integral optical base material 77.

Preferably, the two opposite optical glasses (transparent plates 2) are thicker than the intermediate optical glasses (transparent plates 2), to thus provide an allowance necessary for the subsequent machining of the end surfaces of the optical element. For example, when the thickness of the intermediate optical glass is 1 mm, the thickness of the opposite end optical glass is about 1.5 mm.

Figure 15C shows how to cut the individual laminated blocks 7 from the optical base material 77. The cutting is effected along the planes forming angles $\alpha$ and $\beta$ and intersecting all of the laminated planes in the lengthwise and crosswise direction, by an automatic cutter by which individual laminated blocks 7 are mass-produced.

Embodiment 8

Figure 2 shows how to polish the end surface C opposed to the surface A forming an angle $\alpha$ with respect to the laminated planes of the laminated block 7, and forming an angle $\tau$ with respect to the laminated planes of the laminated block 7.

First, a wedge type polishing surface plate 25 having an apex angle or $\tau - \alpha$ is adhered to a polishing optical surface plate 24, and then a large number of individual laminated blocks 7 are located side by side on the polishing surface plate 25 and are connected to each other. The surfaces C of the laminated block 7 are polished in parallel with the surface plate 24, so that laminated blocks having opposite polished side surfaces can be mass-produced by one operation.

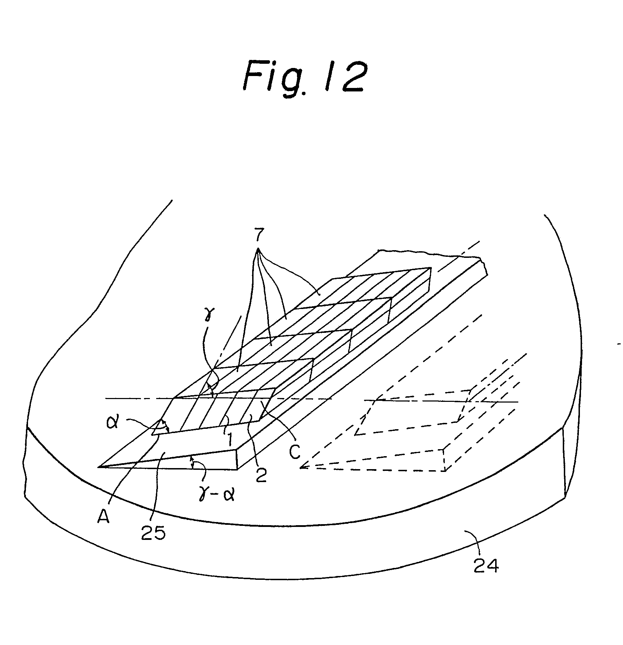

It is possible to provide a plurality of wedge type of surface plates 25 on the polishing surface plates 24, to polish an increased number of laminated blocks 7 by one operation, as shown by an imaginary line in Fig. 12.

The surfaces D opposed to the surfaces B forming the angle $\beta$ with respect to the laminated planes and forming the angle $\tau$ with respect to the laminated planes, can be polished in the same way as the surfaces C mentioned above.

After completion of the polishing of the side faces C and D, the other end faces of the individual laminated blocks 7 are subject to a planer machining, shaping or a surface treatment, to be given desired optical functions, in the same way and by one operation or individually, if necessary, to obtain a compound optical element.

The order of the machining operations including the polishing operations is not limited to the above mentioned order; namely, the end faces can be polished before the side faces.

Embodiment 9

Figure 13 shows a construction of an optical head for a photomagnetic disc according to the present invention, wherein 100 designates a compound optical element according to the present invention and corresponding to the compound optical element (embodiment 6) shown in Fig. 10B.

In Fig. 13, the optical system of the optical head is encircled by a dotted line, and it is possible to additionally provide a tracking error detecting function. This embodiment is basically similar in function to the prior art shown in Fig. 23, and accordingly, a detailed explanation will not be given herein. It can be seen that, in the embodiment illustrated in Fig. 13, the six components of the beam shaping prism 106, the beam splitter 19, the direction changing prism 16, the $\lambda/2$ plate 111, the polarization beam splitter 110, and the mirror 14 in the prior art are replaced by a single compound optical element 100 according to the present invention. The construction according to the present invention is greatly simplified in comparison with the prior art.

As can be understood from the foregoing, according to the present invention, a precise and small compound optical element can be produced, and this results in a simplification of the alignment (adjustment) of an optical axis. Furthermore, according to the present invention, the number of boundary surfaces between the components can be reduced, resulting in less wavefront aberration.

In addition, a plurality of small laminated blocks can be mass-produced from a large optical base material having transparent parallel plates and thin plates or films having desired optical function(s), laminated one on another, which also contributes to an increased quality and efficiency and reduced size and cost of an optical device in which the compound optical element of the present invention is incorporated.

The present invention also can be applied to a phase element.

The optical communication technology is now employed at an increasing pace in communications systems, data processing and OA equipment. The progress of optical disc technology, in particular optical disc devices which use laser beams to record, regenerate and erase data, and the recording media used therein, has been particularly rapid; for example, although initially intended for only commercial use, as in CD's, CD-ROMs are now used as a ROM medium for personal computers, as mentioned above.

The use of optical discs as large capacity storage devices for data processing equipment such as OA equipment is also increasing, and the development of writable photomagnetic discs is progressing and will provide an even larger storage capacity than the magnetic discs most commonly used today.

Various optical elements are used in these types of applied optical devices, and polarizers and phase elements are typical examples of such optical parts.

Phase elements such as linear phase elements, for example, 1/2 wave plates or 1/4 wave plates, are a basic optical part and are widely used to control the polarization of light.

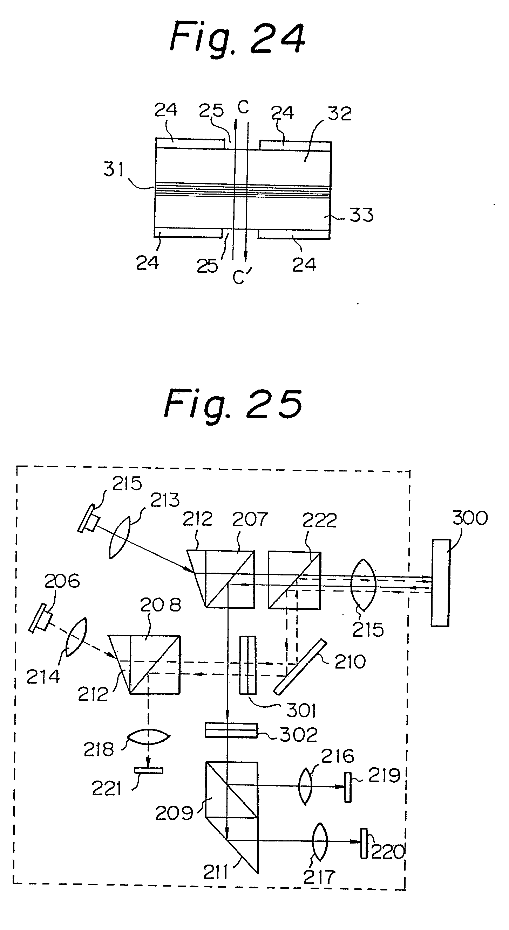

Figure 24 is a cross-sectional view of a phase element (wavelength plate) of the prior art, wherein 31 is an optically anisotropic crystal such as a thin plate of quartz crystal, which is uniaxially anisotropic, cut parallel to the optical axis thereof, 32 and 33 are transparent flat plates, for example, flat sheets made of optical glass, C-C′ is a light beam vertically incident on the optically anisotropic crystal thin plate 31, 24 is a shading cover made of non-stick film such as aluminium, and 25 is a light beam entry/exit window.

In this case, incident light beams pass through the quartz crystal plate and are split into ordinary light and extraordinary light. The mathematical expression for the phase difference $\Delta$ of both beams is well-known and may be expressed as follows:

$$\Delta = 2\pi(d/\lambda)(n_e - n_o) \qquad (1)$$

In this expression, d is the thickness of the optically anisotropic crystal thin plate 31, $\lambda$ is the wavelength of the light beam, and $n_e$ and $n_o$ are the refraction rates of the ordinary and extraordinary light beams.

In this expression, by giving values to d, $\lambda$, $n_e$ and $n_o$ , it is possible to create any optional phase element (wavelength) with either a 1/2 wavelength or 1/4 wavelength.

An example of an applied optical device which uses a phase element (wavelength) will be described.

Figure 25 is a drawing of the structure of a two-beam type optical head used in a photomagnetic disc in the prior art, wherein 101 is a 1/4 wavelength plate and 102 is a 1/2 wavelength plate.

The laser beam emitted from the reading laser diode 215 passes through the collimator lens 213, the beam shaping prism 212, the beam splitter 207, the dichroic mirror 222, and the object lens 215, is incident upon the photomagnetic recording media 300, and after picking up the data on the media, is then reflected therefrom to return by the same route, is reflected off the beam splitter 207, and enters the 1/2 wavelength plate 302. Here, to obtain the maximum signal amplitude during the subsequent differential detection, the polarizing direction is rotated 45 degrees with respect to the optical axis and the beam then enters the polarization beam splitter 209 and is split into two, so that the differential detection on the media signal can be performed in the photodetectors 219 and 220.

The laser beam emitted from the writing laser diode 206 passes through the other collimator lens 214, the beam shaping prism 212, and the polarizing beam splitter 8, and enters the 1/4 wavelength plate 301. Here the light beam becomes circularly polarized, is reflected by the mirror 210 and the dichroic mirror 222, and then is irradiated to the photomagnetic recording media 300 using the object lens 215. The writing laser beam has a longer wavelength than the reading laser beam, and because of its higher power, it is absorbed by and thus raises the temperature of the medium. A small amount of return light (circularly polarized light) follows the route described above, enters the 1/4 wavelength plate 301 again, and is then returned to a linear polarization, is reflected by the polarizing beam splitter 208, and is detected by the photodetector 221 used for detecting tracking errors.

Namely, the device is arranged so that two phase elements (wavelength plates) are used to split a beam into two optical paths. The area enclosed by the dotted line represents the optical system of the 2-beam type optical head for a photomagnetic disc.

Phase elements in the prior art, as in a typical example such as a wavelength plate, are always individual optical pieces, each having a single function as described above, which means that an optical device constructed using a phase element (wavelength plate) inevitably has many components and the device is designed so that the optical paths are inevitably split.

Many current applications of optical technology required devices to be small and compact; in particular, the optical head in optical disc drives must be small and light weight to allow the optical disc to operate at the required high speed and high density. To satisfy these requirements, attention is focussed on the problem of providing the phase element (wavelength plate) with an even higher functionality, as the optical element used in optical disc drives.

Figures 14A and 14B are cross sectional diagrams which explain the construction and principles of the optical element of this invention.

In the diagram, 1 is an optical functional layer made of a thin film or thin plate with desired properties, and 2, 2 are transparent media between which the optical functional layer is tightly and optically held. Further, on the outer surfaces of the transparent media 2, a shading cover 24 is provided for the two pairs of light beam entry/exit windows 25.

Figure 14A shows the case wherein the transparent medial are flat plates, and Fig. 14B shows an example of a rectangular prism.

In the figures, A-A′ and B-B′ indicate the paths of two light beams irradiated from different, mutually non-parallel directions. The construction is such that, depending on which beam is incident diagonally at a specified angle on the optical functional layer, then the desired phase element function will be executed. For example, through a design such that 1/2 wavelength phase difference is assigned to the A-A′ direction and a 1/4 wavelength phase difference is assigned in the B-B′ direction, the function of two wavelength plates can be performed by one optical element, and further, it is possible to cause the two optical paths of the beams to intersect.

Namely, the problems described above may be solved through the construction of an optical element which is made to function as a phase element with various special properties with respect to multiple beams incident on an optical functional layer, held between two transparent media (plates), at angles of incidence which are not right-angles (to the layer) but are diagonal angles, from non-parallel opposing directions. The two transparent media may be constructed of transparent flat plates, or may be prisms or a combination of the plates and prisms.

For example, Fig. 14B shows a case wherein the two transparent media are composed of rectangular prisms, wherein the optical function layer 1 is a thin plate of optically anisotropic crystal such as quartz, which is a uniaxial anisotropic crystal, cut parallel to the optical axis and struck by beams from directions A-A' and B-B'. Beams which are made diagonally incident upon the quartz plate are doubly refracted and split into two optical waves, and if the angles of refraction of the wave normal vectors of the two light waves are assumed to be $x_1$ and $x_2$, and the refractive index with respect to the wave normal vectors of the two light waves are assumed to be $n_1$ and $n_2$, the following equation can be used to find the phase difference $\Delta'$ of both light waves after their passage through optical functional layer 1.

$$\Delta' = 2\pi(d/\lambda)[n_2 Cos(x_2) - n_1 Cos(x_1)] \quad (2)$$

wherein d is the thickness of the optical functional layer (quarts plate) and $\lambda$ is the wavelength of the light beam.

Thus, by determining $x_1$, $x_2$, $n_1$, $n_2$ while taking into consideration factors such as d, $\lambda$, the angle of incidence of the light beam, and the direction of the refractive index ellipsoid of the quartz, it is possible to manufacture a leaning incident-type phase element (wavelength plate) which functions as a 1/2 wavelength or as a 1/4 wavelength, or as any other optional phase element, with respect to multiple light beams irradiated in different directions from one optical element.

Figure 14B shows a manufactured optical element (phase element) wherein the two transparent media are rectangular prisms of optical glass, and the optical functional layer 1 is a thin plate of optically anisotropic crystal, such as quartz, which is a uniaxial anisotropic crystal, cut parallel to the optical axis, the element functioning as a 1/2 wavelength plate for light from the A-A' direction, and as a 1/4 wavelength plate for light from the B-B' direction.

Figure 15 shows a component diagram of the two-beam type optical head used in photomagnetic discs. This uses the optical part which is an embodiment (Embodiment 10) of this invention as described above, and is an example of an application to a two-beam type optical head of prior art shown in Fig. 25.

In the Figure, 204 is the leaning incident-type phase element of this invention, in which rectangular prisms are used for the transparent media 2, and is designed to function as a 1/2 wavelength plate for reading laser beams which are output from the reading laser diode 205, pass through the lens 213, the beam shaping prism 212, the beam splitter 207, the dichroic mirror 222, and the lens 215, and are then reflected off the photomagnetic recording media 300 and returned; and as a 1/4 wavelength plate for writing lasers which are output from the writing laser diodes 206, pass along a return path through the lens 214, the beam shaping prism 212, and the polarization beam splitter 8, and after passing through the phase element 4 of this invention and through the mirror 210, the dichroic mirror 222, and the lens 215, are then reflected by the photomagnetic recording media 300 and returned.

Accordingly, it is possible to make the optical head smaller and lighter in weight than in the prior art example shown in Fig. 25, since the number of components can be reduced by one, and the optical paths can be made to intersect using the phase element 4 which is the optical element of this invention.

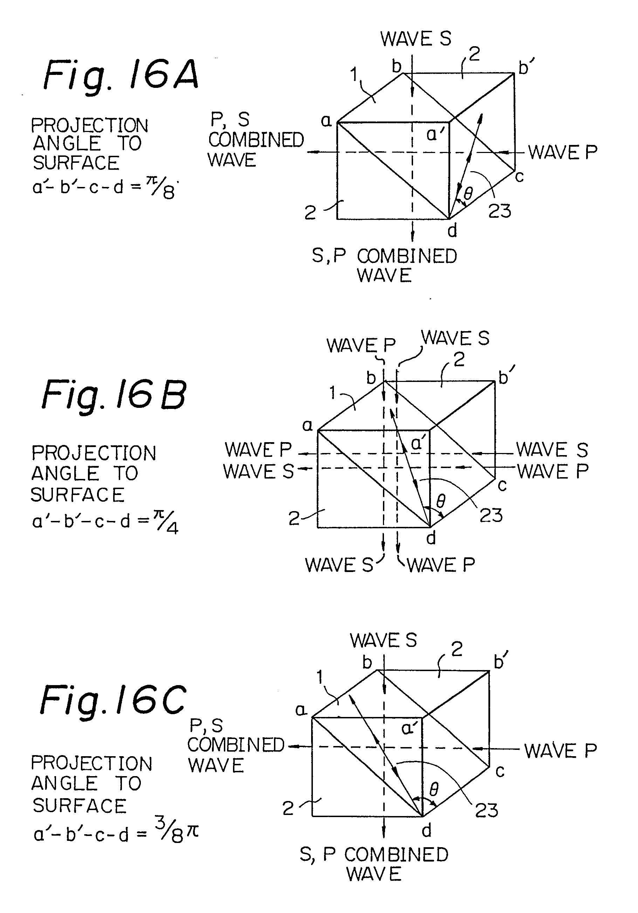

Figure 16A, 16B and 16C show other embodiments (Embodiments 11, 12, and 13) of this invention.

Any uniaxial anisotropic crystal, such as quartz, may be used for the thin plates of the optical functional layer 1. Both transparent media 2 are rectangular prisms, with the two plates held at right-angles and the optical functional layer 1 at 45 degrees to each other.

The construction is such that incident light beams are set perpendicular to the prism surface and functional as a 45 degree incident type phase element with respect to the optical functional layer 1.

In Figs. 16A, 16B and 16C, 23 indicates the direction of the C axis or optical axis of the quartz, the crystal surface being cut so that it is parallel to the surface of the optical functional layer 1.

Figure 16A shows the case wherein the angle $\theta$ between one side (c-d) of the optical functional layer 1 (represented by a surface a-b-c-d) and optical axis 23 is 30 degrees; in Fig. 16B, the angle $\theta$ is 55 degrees; and in Fig. 16C, the angle $\theta$ is 74 degrees.

Viewed from the direction of incidence of the light beam, the above angles $\theta$, i.e., the angles of projection of the light beams 23 on the prism surface (surface a'-b'-c-d), are $\pi/8$, $\pi/4$, and $3\pi/8$, respectively.

These embodiments are designed with 1/2 wavelength phase elements for a 45 degree angle of incidence.

Therefore, in Fig. 16A, because the irradiated wave P and wave S are emitted by rotating only $\pi/4$ for all angles of projection on the prism surface (surface a'-b'-c-d), the light beam may be extracted as a mixed wave of P and S for the original polarizing direction.

In Fig. 16B, because the irradiated wave P or wave S is emitted by rotating $\pi/2$ to the angle of projection, the wave S may be converted into the wave P for extraction, and the wave P may be converted into the wave S for extraction.

Figure 16C is readily understood because it functions in exactly the same way as Fig. 16A.

Therefore, it is clear that the optical element of this invention can be used as a leaning incident type phase element (wavelength plate) having a specific function for light beams in one direction. For this purpose, it is easily designed for use as a thin plate cut so that the optical axis is perpendicular to the refracting light beam.

As described above, the optical element of this invention can be effectively used as a phase element having specific functions with respect to multiple light beams which are incident from different, non-parallel directions by a single element (piece); such an invention therefore has a considerable role to play in the development of smaller and lighter two beam optical heads for optical devices such as photomagnetic discs.

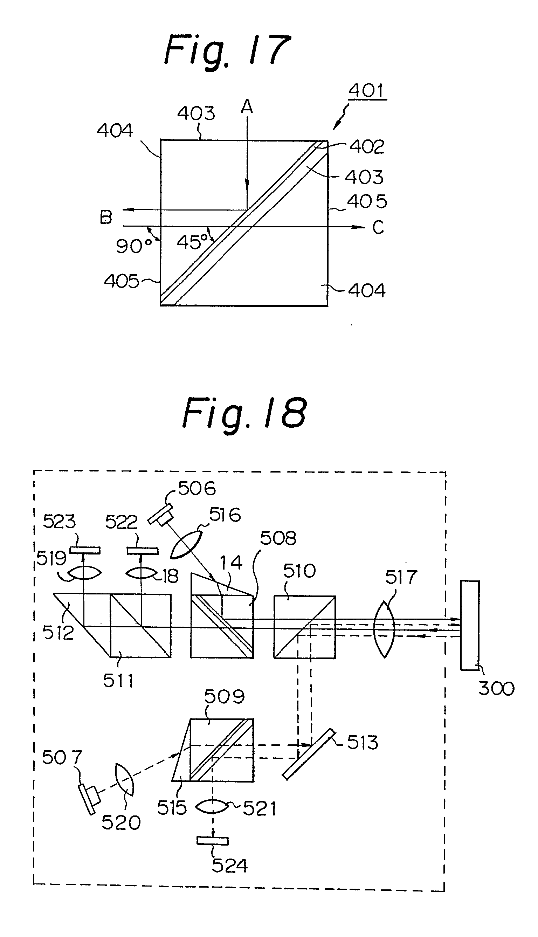

Figure 17 shows a structure and principle of another embodiment of an optical element of this invention, wherein 401 is an optical functional layer made of a thin film 402 and a thin plate 3 having desired optical properties, and 404 denotes transparent media in the form of rectangular prisms, as most commonly used. The optical functional layer 401 is tightly held on both sides by, and optically adhered to, the inclined surfaces of the prisms 404.

Because light beams incident upon the incident/ emitting surfaces 405 of the associated rectangular prisms reach the optical functional layer 401 having the two desired optical functions as described above, and is subjected to two different effects thereat, it is possible to control the properties of the transmitted and reflected beams.

Namely, the problems described above may be solved through the construction of an optical element which is composed of an optical functional layer and two transparent media tightly holding the layer on both sides, the media holding the optical functional layer consisting of multiple thin films 402 or thin plates 403, or a combination thereof, and having multiple optical functions with respect to the incident light. Such an optical element may be used in a two-beam optical head for a photomagnetic disc.

In Fig. 17, assuming a construction such that the optical functional layer 402 functions as a polarization beam splitter, and the optical functional thin film 3 functions as a 1/2 wave plate, the S-polarized light beams from direction A perpendicularly incident upon the incident/emitting surface 405 of the associated rectangular prisms are reflected by the thin film 402 and are emitted in the direction B.

If a photomagnetic disc is assumed to be in the B direction, the light beams reflected from the disc and subject to Kerr rotation are transmitted through the thin film 402 and the thin plate 3, thus generating a phase difference of 1/2 wavelength between the faster light wave and the slower light wave. Accordingly, this one optical element fulfills the functions of two individual optical components, i.e., a polarization beam splitter and a 1/2 wavelength plate.

Figure 18 shows a two-beam type optical head for a photomagnetic disc according to the present invention. This embodiment is applied to a two-beam type optical head of the prior art shown in Fig. 25. In Fig. 18, numerals 508 and 509 are the optical elements shown in Fig. 17, each being comprised of isosceles rectangular prisms used as the transparent media 404, an optical functional thin film 402 as the optical functional layer 401, which functions as a beam splitter in the element 508 and as a polarization beam splitter in the element 509, and an optical functional thin plate 403 functioning as a phase element (wavelength plate). The optical functional thin plate 403 functions as a 1/2 wavelength plate in the optical element 508, and as a 1/4 wavelength plate in the optical element 509. The optical element 508, manufactured as above, is inserted in the optical path which links the beam bending prism 414, the dichroic mirror 410, and the polarization beam splitter 411, in the reading optical system in which the laser beam emitted by the reading laser diode 506 is reflected and returned by the photomagnetic recording media 300. The optical element 509 is inserted between the mirror 513 and the beam bending prism 515, in the writing optical system in which a laser beam emitted from the writing laser diode 7 is reflected by the photomagnetic media 300 and returned.

Namely, the optical system is such that the optical element 8 functions as two individual optical elements, the beam splitter 208 in Fig. 25 and the 1/2 wavelength plate 302 of Fig. 5, and the optical element 9 functions as two individual optical elements, the polarization beam splitter 208 and the 1/4 wavelength plate 301 of Fig. 5. This makes it possible to reduce the size and weight of the optical head, compared to the example of the prior art shown in Fig. 25, since the number of components can be reduced by two.

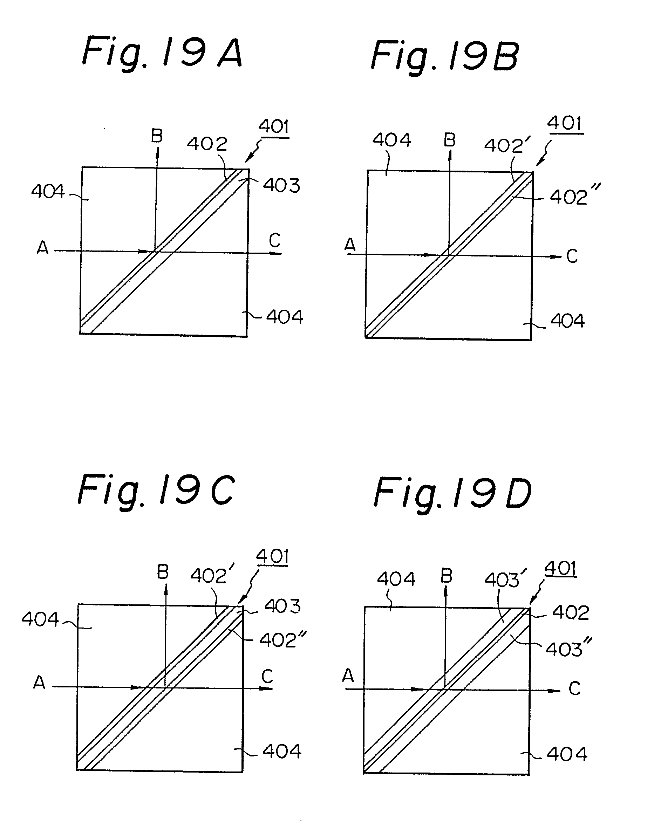

Figure 19A, 19B, 19C and 19D show other embodiments of the invention.

The transparent media 404 are all rectangular prisms, with the optical functional layers 401 held tightly between the associated prisms 404 at a 45 degree angle. Various combinations were used for the optical functional layer 1. The optical functional thin film 402 comprises a conductive multi-layer thin film made of $SiO_2$, $TiO_2$, $Al2O3$, or MgF or the like, and the optical functional thin plate 403 consists of a crystal surface cut so that the C axis of the quartz, i.e., the direction of the optical axis, is parallel to the surface of the optical functional layer 401. An optical epoxy UV hardenable resin was used for the adhesion of the surfaces.

In Fig. 19A, the construction is such that the optical functional layer 401 is a combination of a polarization beam splitter (PBS) and a wavelength plate, and thus with 1/2 and 1/4 wavelength plates, the optical system shown in Fig. 18 can be achieved. In Fig. 19B, the optical functional layer 401 comprises two different conductive multi-layer films with different optical functions, and with a combination of a Band Pass Filter (BPF) function film 402 and a PBS function film 402″, the optical element functions to transmit only a P wave of a linearly polarized light with a specified wavelength, and to reflect other wavelengths.

In Fig. 19C, the optical functional layer 401 has a three component construction, consisting of a thin film 402 which functions as a BPF, a thin plate which functions as a 1/2 wavelength plate, and a thin film 402″ which functions as a PBS. This element will function, for example, as an optical element which partially transmits linearly polarized light beams of a specified wavelength as P waves and reflects all other waves.

In Fig. 19D, shows a construction comprising three functions, in which the thin film 402 functioning as a PBS is held tightly between two 1/2 wavelength plates, and the thin plates 403′ and 403″ function as 1/4 wavelength plates, and accordingly, the optical element can transmit or reflect specified polarized components of linearly polarized or circularly polarized beams, or a specified quantity of light in a specified polarized state.

As described above, the optical element of the present invention can be effectively used as an optical element having multiple functions and such an invention obviously has a considerable role to play in the development of smaller and lighter two beam optical heads for optical devices such as photomagnetic discs.

## Claims

1. An optical base material comprising more than two transparent parallel plates and more than one thin layer having a desired optical function, said transparent parallel plates and thin layers being alternately laminated so that the transparent parallel plates form the outermost layers.

2. An optical base material according to claim 1, wherein each of said thin layers comprises a plurality of functional layers having different optical functions.

3. An optical base material according to claim 1, wherein said functional layers of each thin layer are laminated one on another.

4. A compound optical element having four side faces obtained by cutting an optical base material according to claim 1 along four planes intersecting all of the laminated planes, the outer end faces of at least one of said outermost transparent parallel plates being formed to have a predetermined shape, so that at least two of the four side faces and the end surfaces define a light incident surface on which light is made incident and a light emitting surface from which light is emitted.

5. A compound optical element according to claim 4, wherein at least one of said outer end faces of at least one of said outermost transparent parallel plates is formed to be parallel with the laminated planes.

6. A compound optical element according to claim 4, wherein at least one of said outer end faces of at least one of said outermost transparent parallel plates is formed to be not parallel with the laminated planes.

7. A compound optical element according to claim 4, wherein at least one of said outer end faces of at least one of said outermost transparent parallel plates is formed to have a curved surface.

8. A compound optical element according to claim 4, wherein at least one of said outer end faces of at least one of said outermost transparent parallel plates is formed to have a predetermined grating.

9. An optical head comprising a compound optical element according to claim 4.

10. An optical element having an optical functional layer made of thin film or thin plate and two transparent media holding said layer tightly therebetween, said optical element being a phase element having various properties with respect to multiple light beams having angles of incidence on the said optical functional layer which are not right-angles but are different and non-parallel.

11. An optical element according to claim 10, wherein said two transparent media are transparent plates.

12. An optical element according to claim 10, wherein said two transparent media are prisms.

13. An optical element according to claim 10, wherein said two transparent media are combination of transparent plates and prisms.

14. A two-beam type optical head for use in a photomagnetic disc, characterized by using the optical element according to claim 10, wherein said optical element is adapted to be a 1/2 wavelength plate for a returned light of a reading laser beam reflected from a recording media, and to be a 1/4 wavelength plate for an emitted light beam of a writing laser beam prior to an incidence thereof on the recording medium, and for the returned beam of the writing laser beam reflected from the recording medium.

15. An optical element having an optical functional layer and two transparent media holding said layer tightly therebetween, wherein said optical functional layer is composed of a plurality of thin plates or films tightly connected to each other and having a plurality of optical functions for a light beam incident thereupon.

16. An optical element having an optical functional layer and two transparent media holding said layer tightly therebetween, wherein said optical functional layer is composed of a combination of at least one thin plate and at least one film, tightly connected to each other and having a plurality of optical functions for a light beam incident thereupon.

17. An optical element according to claim 16, wherein said two transparent media are made of prisms.

18. A two-beam type optical head for use in a photomagnetic disc, characterized by using an optical element according to claim 15, in which the optical functional layer has a thin film which functions as a beam splitter and a thin plate which functions as a phase element.

19. A two-beam type optical head for use in a photomagnetic disc, characterized by using an optical element according to claim 16, in which the optical functional layer has a thin film which functions as a beam splitter and a thin plate which functions as a phase element.

20. A method of manufacturing a compound optical element from an optical base material according to claim 1, which comprises cutting the optical base material along four planes intersecting all of the laminated planes to produce a number of laminated blocks, each having four side faces obtained when cut along the four planes intersecting all of the laminated planes, forming outer end faces of at least one of said outermost transparent parallel plates to have a predetermined shape, and optically machining at least two of the six faces including the four side faces and the end surfaces to be a light incident surface on which light is made incident and a light emitting surface from which light is emitted.

21. A method of manufacturing a compound optical element from an optical base material according to claim 20, wherein at least one of said outer end faces of at least one of said outermost transparent parallel plates is formed to be parallel with the laminated planes.

22. A method of manufacturing a compound optical element from an optical base material according to claim 20, wherein at least one of said outer end faces of at least one of said outermost transparent parallel plates is formed to be not parallel with the laminated planes.

23. A method of manufacturing a compound optical element from an optical base material according to claim 20, wherein at least one of said outer end faces of at least one of said outermost transparent parallel plates is formed to have a curved surface.

24. A method of manufacturing a compound optical element from an optical base material according to claim 20, wherein at least one of said outer end faces of at least one of said outermost transparent parallel plates is formed to have a predetermined grating.

*Fig. I*

# Fig. 2

A : SIDE FACE (a-d-h-e)
B : SIDE FACE (a-b-f-e)
C : SIDE FACE (b-c-g-f)
D : SIDE FACE (c-d-h-g)

EP 0 359 658 A2

Fig. 3 A

Fig. 3 B

Fig. 3C

Fig. 3D

Fig. 4

# Fig. 5A    Fig. 5B    Fig. 5C

# Fig. 6A

# Fig. 6B    Fig. 6C

# Fig. 6D

# Fig. 7A    Fig. 7B    Fig. 7C

# Fig. 8 A

$\lambda_1$  $\lambda_2$  $\lambda_3$  $\lambda_4$  $\lambda_5$  $\lambda_6$  $\lambda_7$

23

$\lambda_1 \sim \lambda_7$

# Fig. 8 B

$\lambda_1$  $\lambda_2$  $\lambda_3$  $\lambda_4$  $\lambda_5$  $\lambda_6$  $\lambda_7$

23

$\lambda_1 \sim \lambda_7$

*Fig. 9A*

*Fig. 9B*

OPTICAL AXIS

*Fig. 9C*

22.5°

45°

OPTICAL AXIS

*Fig. 10A*

*Fig. 10B*

*Fig. I IA*

*Fig. I IB*

*Fig. I IC*

# Fig. 12

## Fig. 13

## Fig. 14A

## Fig. 14B

*Fig. 15*

# Fig. 16A

PROJECTION
ANGLE TO
SURFACE
$a'-b'-c-d = \pi/8$

WAVE S

P, S COMBINED WAVE

WAVE P

S, P COMBINED WAVE

# Fig. 16B

PROJECTION
ANGLE TO
SURFACE
$a'-b'-c-d = \pi/4$

WAVE P  WAVE S

WAVE P
WAVE S

WAVE S
WAVE P

WAVE S  WAVE P

# Fig. 16C

PROJECTION
ANGLE TO
SURFACE
$a'-b'-c-d = 3/8 \pi$

WAVE S

P, S COMBINED WAVE

WAVE P

S, P COMBINED WAVE

# Fig. 17

# Fig. 18

# Fig. 19 A

# Fig. 19B

# Fig. 19 C

# Fig. 19 D

Fig. 20 A

Fig. 20 B

Fig. 20 C

# Fig. 21

# Fig. 22

Fig. 23

# Fig. 24

# Fig. 25